# EUROPÄISCHE PATENTSCHRIFT

(11) **EP 2 249 943 B1**
(45) Veröffentlichungstag und Bekanntmachung des Hinweises auf die Patenterteilung: **27.08.2014**
(21) Anmeldenummer: 09715396.9
(22) Anmeldetag: 26.02.2009
(51) Int. Cl.: B01D 46/24, B01D 46/52, B01D 46/00, F02M 35/024

(54) **WIRKUNGSGRAD ERHÖHTER MEHRFACHBALGFILTER**
MULTIPLE BELLOW-TYPE FILTER WITH INCREASED EFFICIENCY
FILTRE À SOUFFLETS MULTIPLES, À RENDEMENT ACCRU

(30) Priorität: 26.02.2008 DE 102008011186; 23.12.2008 DE 102008062953
(43) Veröffentlichungstag der Anmeldung: 17.11.2010
(73) Patentinhaber: Mann + Hummel GmbH, 71638 Ludwigsburg (DE)
(72) Erfinder: MÜNKEL, Karlheinz, 75038 Oberderdingen (DE); KOLCZYK, Markus, 74395 Mundelsheim (DE); BECKER, Stefan, 68305 Mannheim (DE); HEIM, Michael, 71691 Freiberg a. N. (DE)
(86) Internationale Anmeldenummer: PCT/EP2009/052317
(87) Internationale Veröffentlichungsnummer: WO 2009/106589

(56) Entgegenhaltungen:
- EP-A- 0 424 933
- DE-A1- 3 805 361
- FR-A- 877 485

## Beschreibung

### Gebiet der Erfindung

Die Erfindung bezieht sich auf ein Filterelement bzw. einen Luftfilter, und insbesondere auf ein Filterelement bzw. einen Luftfilter in der Ausgestaltung eines Mehrfachbalgfilters mit einem erhöhten Wirkungsgrad zum Einsatz in Brennkraftmaschinen.

### Hintergrund der Erfindung

Die für Brennkraftmaschinen benötigte Verbrennungsluft wird in der Regel vor dem Zuführen in den Verbrennungsraum gereinigt, um die Leistungsfähigkeit und die Lebensdauer der Brennkraftmaschine zu erhöhen. Dabei wird für die Reinigung der Verbrennungsluft in der Regel eine Luftfilteranordnung verwendet. Dies ist insbesondere für Brennkraftmaschinen von Bedeutung, die in einer Umgebung arbeiten, die einer besonderen Verschmutzungsbelastung der Umgebungsluft ausgesetzt sind, so wie beispielsweise im Bereich des Baugewerbes bzw. der Landwirtschaft. Insbesondere im Bereich des Baugewerbes bzw. in der Landwirtschaft tritt eine mitunter sehr hohe Staubbelastung auf, die eine Reinigung der Verbrennungsluft notwendig macht. Aufgrund der Tatsache, dass das Spektrum der Staubpartikelgröße im Regelfall vorher nicht bekannt ist, muss eine Luftfilteranordnung so ausgestaltet sein, dass sämtliche Partikelgrößen, die den Betrieb der Brennkraftmaschine in irgendeiner Weise beeinflussen können, zuverlässig herausgefiltert werden können, um eine Zuführung hinreichend sauberer Verbrennungsluft zu der Brennkraftmaschine zu ermöglichen.

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Aus beispielsweise EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyklon-Vorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsrichtung durchströmt.

Eine dieser Möglichkeiten ist die Ausgestaltung des Hauptfilterelementes in Form eines Faltenbalgfilters. Dabei kann beispielsweise ein Faltenbalg aus einem sternförmig gefalteten Filterelement bestehen, dessen Filterfalten in radialer Richtung verlaufen, wobei sich die Stirnkanten der Filterfalten im Wesentlichen in eine axiale Richtung erstrecken. Ein derartiger Filterfaltenbalg ist beispielsweise bekannt aus WO 2008/067030, bei der das Filterelement aus einem gefalteten Filterbalg besteht, wobei die Stirnkanten der Filterfalten sich in eine axiale Richtung erstrecken, die mit einer Durchströmungsrichtung korrespondiert, während sich die Filterfalten in eine dazu quer verlaufende Richtung erstrecken. Dieser Faltenbalg besteht aus einem Mehrfachbalg, der auf einem begrenzten axialen Abschnitt bzw. einem Abschnitt in Strömungsrichtung eine erhöhte Filterfläche bereitstellt, um auf diese Weise die Filterkapazität zu erhöhen.

### Zusammenfassung der Erfindung

Vor dem Hintergrund des Standes der Technik liegt der vorliegenden Erfindung die Aufgabe zugrunde, ein Filterelement bzw. einen Luftfilter für Brennkraftmaschinen bereitzustellen, der einen verbesserten Wirkungsgrad aufweist bzw. eine optimierte Durchströmung erlaubt.

Die Aufgabe der vorliegenden Erfindung wird gelöst durch den Gegenstand der unabhängigen Ansprüche, wobei weitergebildete Ausführungsformen in den unabhängigen Ansprüchen verkörpert sind.

Gemäß einer beispielhaften Ausführungsform der Erfindung wird ein Filterelement für einen Luftfilter einer Brennkraftmaschine bereitgestellt, wobei das Filterelement einen ersten Filterbalg aufweist mit im Wesentlichen in einer axialen Ausdehnungsrichtung des Filterelementes verlaufenden Filterfalten und einer im Wesentlichen in einer dazu orthogonal verlaufenden Ebene in radialer Ausdehnungsrichtung verlaufenden ersten Faltentiefe und einen zweiten Filterbalg aufweist mit im Wesentlichen in einer axialen Ausdehnungsrichtung des Filterelementes verlaufenden Filterfalten und einer im Wesentlichen in einer dazu orthogonal verlaufenden Ebene in radialer Ausdehnungsrichtung verlaufenden zweiten Faltentiefe, wobei der zweite Filterbalg radial innen zu dem ersten Filterbalg angeordnet ist, wobei eine Tiefe der zweiten Filterfalten tiefer ist als eine Tiefe der korrespondierenden ersten Filterfalten.

Erfindungsgemöäß weisen der erste und der zweite Filterbalg in einer Ebene der radialen Ausdehnungsrichtung einen ersten gebogenen Abschnitt und einen zweiten gebogenen Abschnitt auf mit einem jeweils dazwischen liegenden ersten im Wesentlichen geraden Abschnitt und einem zweiten im Wesentlichen geraden Abschnitt derart, dass der erste und zweite gebogene Abschnitt sowie der erste und zweite im Wesentlichen gerade Abschnitt eine geschlossene ovale Umfangskontur darstellen. Auf diese Weise kann das Filterelement schmal ausgestaltet werden, so dass es eine lange Achse und eine kurze Achse aufweist, wobei beispielsweise das Filterelement entlang der langen Achse in das Luftfiltergehäuse eingebracht werden kann. Auf diese Weise kann die eigentliche Deckelöffnung zum Verschließen des Luftfiltergehäuses nach einem Wechsel des Luftfilters verhältnismäßig klein ausgestaltet werden. Dies ist insbesondere vor dem Hintergrund der Dichtungsgeometrie von Bedeutung. Es sei verstanden, dass die im Wesentlichen geraden Abschnitte auch eine gewisse Wölbung aufweisen können, und unter dieser Ausführungsform auch Ausführungsformen gelesen werden, bei denen die gebogenen Abschnitte eine wesentlich höhere Krümmung aufweisen als die im Wesentlichen geraden Abschnitte, ungeachtet dessen, ob die im Wesentlichen geraden Abschnitte tatsächlich gerade sind oder mit einer gewissen Krümmung versehen sind. Dabei sind an einem ersten axialen Ende des zweiten Filterbalges der erste gerade Abschnitt mit dem zweiten geraden Abschnitt derart mit einem ersten Dichtungselement miteinander verbunden, dass eine Reingasseite und eine Rohgasseite des zweiten Filterbalges fehlluftdicht voneinander getrennt sind.

Weiter erfindungsgemäß ist der erste Filterbalg und der zweite Filterbalg an jeweils einem zweiten axialen Ende derart mit einem zweiten Dichtungselement miteinander verbunden, dass jeweils die Reingasseiten und die Rohgasseiten des ersten Filterbalges bzw. des zweiten Filterbalges fehlluftdicht voneinander getrennt sind.

Somit können auch der erste Filterbalg und der zweite Filterbalg dichtend miteinander verbunden werden. Dabei kann das zweite Dichtungselement auch als ein Kantenschutz ausgestaltet sein, wenn sich das zweite Dichtungselement bis an die Außenkontur des zweiten axialen Endes des ersten Filterbalges erstreckt.

Auf diese Weise kann ein Filterelement in Form eines Mehrfachbalgfilters bereitgestellt werden, das einen erhöhten Wirkungsgrad aufweist und zugleich eine optimierte Durchströmung der zu filternden Verbrennungsluft erlaubt. Aufgrund der Tatsache, dass der zweite Filterbalg radial innen zu dem ersten Filterbalg angeordnet ist, ist bei einer kreisrunden oder ovalen Ausgestaltung der Filterbälge, beispielsweise in Form eines Sternfilterbalges der Umfang des ersten, außen liegenden Filterbalges im Regelfall größer als der Umfang des zweiten, inneren Filterbalges. Dabei bedeutet korrespondierend, dass sich die entsprechend korrespondierenden Filterfalten des ersten und des zweiten Filterbalges im Wesentlichen gegenüberliegen. Aufgrund der unterschiedlichen Umfänge der Filterbälge ist es möglich, bei dem ersten Filterbalg im Vergleich zu dem zweiten Filterbalg eine größere Anzahl von Filterfalten entlang des Umfanges anzuordnen. Somit wird im Allgemeinen der erste Filterbalg eine gröβere Anzahl von Filterfalten aufweisen als der zweite Filterbalg. Um nun die Filterflächenbelastung der beiden Filterbälge aneinander anzunähern, wird die Tiefe der Filterfalten des zweiten, inneren Filterbalges tiefer ausgestaltet als die Tiefe der korrespondierenden Filterfalten des ersten, äußeren Filterbalges. Durch diese unterschiedliche Ausgestaltung kann die Filterfläche des inneren, zweiten Filterbalges vergrößert werden, um auf diese Weise den größeren Umfang des ersten Filterbalges auszugleichen. Somit kann erreicht werden, dass der erste Filterbalg und der zweite Filterbalg gleichmäßiger durchströmt werden, um auf diese Weise die Effizienz des Filterelementes zu erhöhen.

Es sei an dieser Stelle angemerkt, dass ein Filterelement in Form eines Mehrfachbalgfilters selbstverständlich auch mehr als zwei radial ineinander liegende Filterbälge aufweisen kann, wobei insbesondere bei einer größeren Anzahl radial ineinander liegender Filterbälge durch eine zunehmende Faltentiefe bei weiter innen liegenden Filterbälgen eine gleichmäßigere Durchströmung des Filterelementes erreicht werden kann. Ferner sei an dieser Stelle angemerkt, dass sich die Faltentiefe entlang des Umfanges eines Filterelementes verändern kann, etwa um einer äußeren Geometrievorgabe zu folgen, so dass es Bereiche entlang des Umfangs geben kann, die eine höhere Faltentiefe aufweisen als andere Bereiche entlang des gleichen Umfangs. In derartigen Fällen kann es durchaus vorkommen, dass der zweite, innere Faltenbalg Filterfalten aufweist, die eine geringere Tiefe haben als Filterfalten des ersten Filterbalges, wenn diese sich nicht gegenüber liegen und daher nicht korrespondieren.

Gemäß einer beispielhaften Ausführungsform der Erfindung ist die Tiefe der zweiten Filterfalten um den Faktor 1,1 bis 2,5, insbesondere um den Faktor von im Wesentlichen 1,2 bis 1,9 tiefer als die Tiefe der korrespondierenden ersten Filterfalten.

Es hat sich gezeigt, dass insbesondere bei einem Unterschied der Filterfaltentiefe um den Faktor 1,1 bis 2,5 insbesondere um den Faktor von im Wesentlichen 1,2 bis 1,9 eine gute Angleichung der Filterleistung des ersten Filterbalges und des zweiten Filterbalges ergibt unter dem Gesichtspunkt einer gleichmäßigen Durchströmung des ersten Filterbalges und des zweiten Filterbalges und eines zur Verfügung stehenden Platzes.

Gemäß einer beispielhaften Ausführungsform der Erfindung sind die Filterfalten des zweiten Filterbalges gegenüber den Filterfalten des ersten Filterbalges in einer axialen Ausdehnungsrichtung wenigstens abschnittsweise geneigt.

Durch eine Neigung der Filterfalten können diese durch eine gewisse Diagonalkomponente länger ausgestaltet werden, so dass sich die effektive Filterfläche des zweiten Filterbalges gegenüber dem ersten Filterbalg nicht nur durch eine erhöhte Faltentiefe relativ erhöht, sondern auch bedingt durch eine Neigung eine erhöhte Faltenlänge mit sich bringt. Auf diese Weise kann ebenfalls die effektive Filterfläche des zweiten Faltenbalges gegenüber dem ersten Faltenbalg erhöht werden. Darüber hinaus kann durch eine geneigte Anstellung der Falten des innen liegenden Faltenbalges ein konischer Anström- bzw. ein konischer Abströmkanal bereitgestellt werden, der im Einlassbereich des Anströmungskanals einen gröβeren Flächenquerschnitt aufweist als in tieferen Bereichen des Anströmkanals. Analog kann der Abströmkanal im Bereich der Auslassmündung eine große Querschnittsfläche aufweisen, während der Abströmkanal in tieferen Bereichen eine kleinere Querschnittsfläche aufweist. Mit anderen Worten kann durch eine geneigte Ausgestaltung des inneren Filterbalges dort, wo der Anströmkanal breit ist, der auf der anderen Seite des entsprechenden Filterbalges liegende Abströmkanal schmal ausgeführt werden, während in Bereichen, wo der Anströmkanal schmal ist, der Abströmkanal breit ausgestaltet werden kann. Auf diese Weise kann auch die radiale Ausdehnung der Filterfaltenbalganordnung kompakter ausgestaltet werden.

Gemäß einer beispielhaften Ausführungsform der Erfindung ist eine Neigung der Filterfalten des zweiten Filterbalges zu der axialen Ausdehnungsrichtung größer als eine Neigung der Filterfalten des ersten Filterbalges zu der axialen Ausdehnungsrichtung.

Dabei sei verstanden, dass der äußere erste Filterbalg auch im Wesentlichen parallel zu der axialen Ausdehnungsrichtung verlaufen kann, somit eine Neigung von im Wesentlichen null Grad aufweist. Jedoch kann der erste Filterbalg ebenso wie der zweite Filterbalg eine Neigung aufweisen, wobei jedoch die Neigung des zweiten Filterbalges größer ist als die des ersten Filterbalges, um auf diese Weise durch die Schrägstellung sowohl eine vergrößerte Fläche am zweiten Filterbalg bereitstellen zu können als auch eine konische Ausgestaltung der Anström- bzw. Abströmkanäle zu ermöglichen.

Gemäß einer beispielhaften Ausführungsform der Erfindung ist der erste Filterbalg an einem ersten axialen Ende mit einer bezüglich einer Außenkante des ersten Filterbalges formwahrenden Schale versehen.

Auf diese Weise kann die Formstabilität des Filterelementes gewährleistet werden, so dass selbst bei einer unbeabsichtigten Kraftausübung oder einem Anstoßen an die Außenkante diese im Wesentlichen in der Form gewahrt wird, so dass sich die Filterfalten der Faltenbälge nicht verformen, verknicken oder gar einreißen können. Die formwahrende Schale kann zusätzlich mit einer Dichtungskonfiguration versehen sein, die zum abdichtenden Einbringen des Filterelementes in ein Luftfiltergehäuse dienen kann. Ferner kann die formwahrende Schale Griffelemente aufweisen, mittels derer das Filterelement handhabungssicher in ein Luftfiltergehäuse eingebracht werden kann bzw. aus diesem entfernt werden kann. Dies ist insbesondere dann von Bedeutung, wenn das Einsetzen oder Entnehmen des Filterelementes von wenig geschultem Personal durchgeführt wird, dem die Empfindlichkeit und die Funktionsweise eines Filterelementes oft nicht bewusst ist. Darüber hinaus kann die formwahrende Schale auch eine Anordnung aufweisen, die eine verbesserte Anströmung der zu filternden Luft auf die Anströmkanäle ermöglicht, beispielsweise in Form von Luftleitblechen oder einer anderen strömungsoptimierten Geometrie.

Gemäß einer beispielhaften Ausführungsform der Erfindung laufen die im Wesentlichen ersten und zweiten geraden Abschnitte in der Ebene der radialen Ausdehnungsrichtung aufeinander zu.

Auf diese Weise ergibt sich ein radialer Querschnitt eines Filterelementes, der an eine Birnenform erinnert, so dass bei einem Einbringen des Luftfilterelementes in ein Luftfiltergehäuse mit dem schmaleren Ende voran eine verbesserte Dichtung erreicht werden kann, da die geneigt verlaufenden im Wesentlichen geraden Abschnitte erst kurz vor der Endposition kraftbeaufschlagt eine dichtende Verbindung eingehen, sodass insbesondere während des Einführens des Luftfilterelementes lange schleifende Bewegungen von zwei Dichtflächen aufeinander im Wesentlichen vermieden werden können. Dieses ist insbesondere in staubhaltigen Umgebungen von Bedeutung, sodass die Dichtungsoberfläche wesentlich weniger beansprucht wird und insbesondere im Wesentlichen in die Dichtungsrichtung kraftbeaufschlagt wird, für die diese ausgelegt ist.

Auf diese Weise korrespondiert der innere Faltenbalg von seiner Formgebung mit der Formgebung des äußeren Faltenbalges. Damit kann eine strömungsoptimierte Geometrie und ein strömungsoptimierter Anströmkanal bereitgestellt werden, der sich aus dem Zwischenraum zwischen dem ersten Filterbalg und dem zweiten Filterbalg ergibt, und der ebenfalls eine geschlossene ovale Umfangskontur darstellen kann.

Insbesondere bei einer Ausgestaltung des zweiten Filterbalges in Form einer ovalen Umfangskontur können somit die gegenüber liegenden im Wesentlichen geraden Abschnitte durch einen Dichtungswulst miteinander verbunden werden, so dass sich auf dem gegenüber dem ersten axialen Ende liegenden zweiten axialen Ende ein An- bzw. Abströmkanal bildet, der in Richtung des ersten axialen Endes konisch zuläuft. Insbesondere bei einer ovalen Umfangskontur des zweiten Filterbalges kann somit eine gravierende Verformung und damit Schubspannung auf die Filterfalten im Wesentlichen vermieden werden, so dass insbesondere während der Fertigung die Gefahr einer Beschädigung der Filterfalten reduziert werden kann.

Gemäß einer beispielhaften Ausführungsform der Erfindung erstreckt sich das erste Dichtungselement in einer Ebene der radialen Ausdehnungsrichtung nur teilweise über die Tiefe der zweiten Filterfalten des zweiten Filterbalges.

Insbesondere wenn die zweiten Filterfalten des zweiten Filterbalges wechselseitig mit einer Verklebung versehen sind, um eine Reingasseite von einer Rohgasseite zu trennen, kann durch eine nur teilweise Überdeckung der Filterfalten durch das erste Dichtungselement der Bereich zwischen den Filterfalten offen gelassen werden, wodurch die effektive Anströmbzw. Abströmfläche eines Anström- bzw. Abströmkanals erhöht werden kann. Das Dichtungselement kann dabei im Wesentlichen lediglich die Dichtung der beiden im Wesentlichen geraden Abschnitte übernehmen, die sich in der ovalen Form gegenüber liegen, während in den Filterfalten zur Trennung der Rohgasseite von der Reingasseite eine Raupenverklebung vorgesehen sein, die beispielsweise an das erste Dichtungselement angrenzt.

Gemäß einer beispielhaften Ausführungsform der Erfindung erstreckt sich das zweite Dichtungselement in einer Ebene der radialen Ausdehnungsrichtung nur teilweise über die Tiefe der ersten Filterfalten und der zweiten Filterfalten.

Auf diese Weise kann das zweite Dichtungselement verhältnismäßig schmal ausgestaltet sein und bei einer Verklebung der ersten Filterfalten bzw. der zweiten Filterfalten durch eine Raupenverklebung können die entsprechend gegenüber liegenden Seiten der Filterfalten offen gelassen werden, so dass sich eine Erhöhung der effektiven An- bzw. Abströmflächen eines An- bzw. Abströmkanals ergeben. Dabei ist nicht ausgeschlossen, dass an der Auβenkontur des zweiten axialen Endes des ersten Filterbalges ein Kanten- bzw. Stoßschutz vorgesehen sein kann, der beispielsweise als eine formwahrende Schale ausgestaltet sein kann, ebenso jedoch aus dem gleichen Material wie das zweite Dichtungselement gefertigt sein kann, was insbesondere unter Optimierungsgesichtspunkten eines Produktionsprozesses von Bedeutung sein kann.

Gemäß einer beispielhaften Ausführungsform der Erfindung weist das Dichtungselement einen Polyurethanschaum oder andere für eine Dichtung geeignete Materialien (z.B. andere Schäume aus Silikon oder auch Vergussmassen, z.B. Polyamid oder Polyurethan) auf.

Polyurethanschäume sind verhältnismäßig leicht zu handhaben und binden schnell ab, haben dabei jedoch die gewünschten Eigenschaften, die für eine Dichtungsfunktion, jedoch auch für eine Kantenschutzfunktion geeignet sind. Die Polyurethan(PUR)schaum aufweisenden Dichtungselemente können dabei sowohl das erste Dichtungselement als auch das zweite Dichtungselement sein, jedoch auch weitere Dichtungselemente. Ferner kann auch die Raupenverklebung mit Polyurethanschaum aufweisendem Dichtungsmaterial erfolgen.

Gemäß einer beispielhaften Ausführungsform der Erfindung ist eine Reingasseite des ersten Filterbalges einer Reingasseite des zweiten Filterbalges zugewandt.

Daraus ergibt sich, dass die Anströmseite und damit die Rohgasseite zwei Anströmkanäle aufweisen, nämlich einen äußeren Anströmkanal, der über die äußere Mantelfläche des Filterelementes definiert ist, und einen zweiten koaxial dazu verlaufenden inneren Anströmkanal, der durch die Rohgasseite des zweiten Filterelementes definiert ist. Bei einer Anordnung mit mehr als zwei radial ineinander liegenden Filterelementen ergeben sich auf diese Weise entsprechend mehr Anström- bzw. Abströmkanäle. Eine derartige Ausgestaltung mit zwei Anströmkanälen auf der Rohgasseite und einem Abströmkanal auf einer Reingasseite bei einem Filterelement in einer Ausgestaltung mit zwei Filterbälgen kann auf diese Weise eine optimierte Anströmung auf der Anströmseite durch eine beispielsweise Zyklonanordnung ermöglichen, die auf die entsprechenden Anströmkanäle ausgerichtet ist. Analog kann auf der Abströmkanalseite eine korrespondierende Anordnung eines Sicherheitselementes vorgesehen sein. Bei einer derartigen Anordnung, bei der eine Reingasseite des ersten Filterbalges einer Reingasseite des zweiten Filterbalges zugewandt ist, kann die Abdichtung des Filterelementes gegenüber dem Luftfiltergehäuse in einer größeren Entfernung zu dem Vorabscheider vorgenommen werden, so dass sich eine Belastung dieser Dichtungsanordnung durch die Anströmung aus dem Vorabscheider reduzieren lässt. Insbesondere kann bei einer derartigen Ausgestaltung der Abströmkanal des Luftfiltergehäuses mit einer kleineren Querschnittsfläche ausgestaltet werden als der Anströmkanal des Luftfiltergehäuses, da der Abströmkanal im Gegensatz zum Anströmkanal über die Lebensdauer geometrisch nicht durch das Filtrat verengt wird.

Gemäß einer beispielhaften Ausführungsform der Erfindung weist der erste Filterbalg eine erste Rohgasseite und eine erste Reingasseite auf, und der zweite Filterbalg eine zweite Rohgasseite und eine zweite Reingasseite auf, wobei der erste Filterbalg und der zweite Filterbalg derart an einer Stirnseite des ersten Filterbalges und einer Stirnseite des zweiten Filterbalges fehlluftundurchlässig miteinander verbunden sind, dass entweder ein erster rohgasseitiger Raum einem zweiten rohgasseitigen Raum oder ein erster reingasseitiger Raum einem zweiten reingasseitigen Raum entspricht.

Es sei verstanden, dass auch eine Kombination der zuvor beschriebenen Merkmale möglich ist, wodurch sich zum Teil eine synergetische Wechselwirkung einstellen kann, die über die Summe der Einzelwirkungen der genannten Merkmale hinausgeht.

Im Folgenden werden nun beispielhafte Ausführungsformen der Erfindung anhand der beigefügten Zeichnungen beschrieben und erläutert:

### Kurze Beschreibung der Zeichnungen

Figur 1 zeigt eine schematische Anordnung eines Luftfiltergehäuses mit einem einzusetzenden Filterelement und einem Deckelelement.
Figur 2 zeigt eine Schnittansicht eines Filterelementes gemäß einer beispielhaften Ausführungsform der Erfindung.
Figur 3 zeigt einen Schnitt orthogonal zu einer axialen Ausdehnungsrichtung eines Filterelementes gemäß einer beispielhaften Ausführungsform der Erfindung.
Figur 4 zeigt einen Schnitt orthogonal zu dem in Figur 2 gezeigten Schnitt in einer axialen Ausdehnungsrichtung.
Figur 5 zeigt einen radialen Schnitt einer Umfangsgeometrie eines Filterelementes gemäß einer beispielhaften Ausführungsform der Erfindung.
Figur 6 zeigt eine Dichtungs- bzw. Kantenschutzkonfiguration eines Filterelementes gemäß einer beispielhaften Ausführungsform der Erfindung.

Die im Folgenden beschriebenen Ausführungsformen sind keinesfalls beschränkend aufzufassen und zeigen zweckmäßige, jedoch nicht ausschließliche Ausführungsformen der vorliegenden Erfindung.

### Beschreibung beispielhafter Ausführungsformen der Erfindung

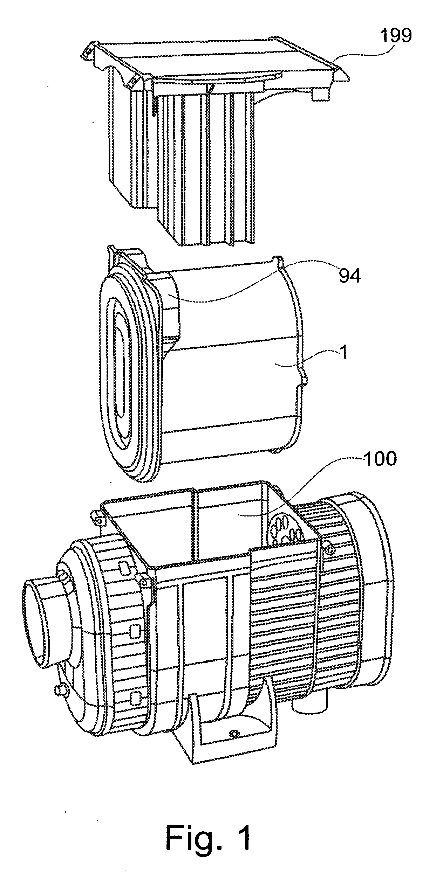

Figur 1 zeigt eine schematische Darstellung eines Luftfiltergehäuses 100 mit einem darin einzusetzenden Filterelement 1 sowie einem Verschluss- bzw. Haltedeckel 199. Das Luftfiltergehäuse 100 kann dabei neben dem Filterelement 1, das hier als Hauptfilterelement ausgestaltet ist, weiterhin ein Vorfilterelement sowie ein Sicherheitsfilterelement aufweisen bzw. aufnehmen. In der hier gezeigten Ausführungsform wird das Filterelement 1 in einer Richtung orthogonal zur Durchströmungsrichtung in das Luftfiltergehäuse eingebracht. Mit Hilfe einer entsprechenden Geometrie an dem Verschlusselement 199 kann das in das Luftfiltergehäuse 100 eingebrachte Filterelement 1 beispielsweise dichtend an eine entsprechende Dichtfläche im Luftfiltergehäuse 1 angedrückt werden. Die Kraftbeaufschlagung kann dabei in einer im Wesentlichen axialen Richtung korrespondierend mit der Durchströmungsrichtung erfolgen. Darüber hinaus sind jedoch auch Ausführungsformen denkbar, bei denen das Filterelement 1 eine Dichtungskonfiguration aufweist, die eine im Wesentlichen radiale Kraftbeaufschlagung erfordert, so dass durch das Verschlusselement 199 nicht zwingend ein Anpressdruck in axialer Richtung erfolgen muss. Das Verschlusselement 199 kann jedoch ebenfalls eine entsprechende dichtende Anlagefläche für das Filterelement 1 aufweisen. Ferner weist das Verschlusselement 199 zweckmäßigerweise eine Dichtungskonfiguration auf, mit der das Luftfiltergehäuse 100 dichtend verschlossen werden kann, wenn das Filterelement 1 eingesetzt ist. Das Filterelement 1 kann dabei, wie in Figur 1 gezeigt, einen Griff 94 aufweisend, mit dem das Filterelement sowohl in das Luftfiltergehäuse 100 eingebracht werden kann als auch aus diesem entnommen werden kann. Derartige Griffe 94 sind zweckmäßigerweise so ausgestaltet, dass sie auch mühelos gefunden werden können, wenn kein Blickkontakt zwischen einer Bedienperson und dem Filterelement 1 vorhanden ist bzw. die Bedienperson eventuell auch Schutzhandschuhe trägt.

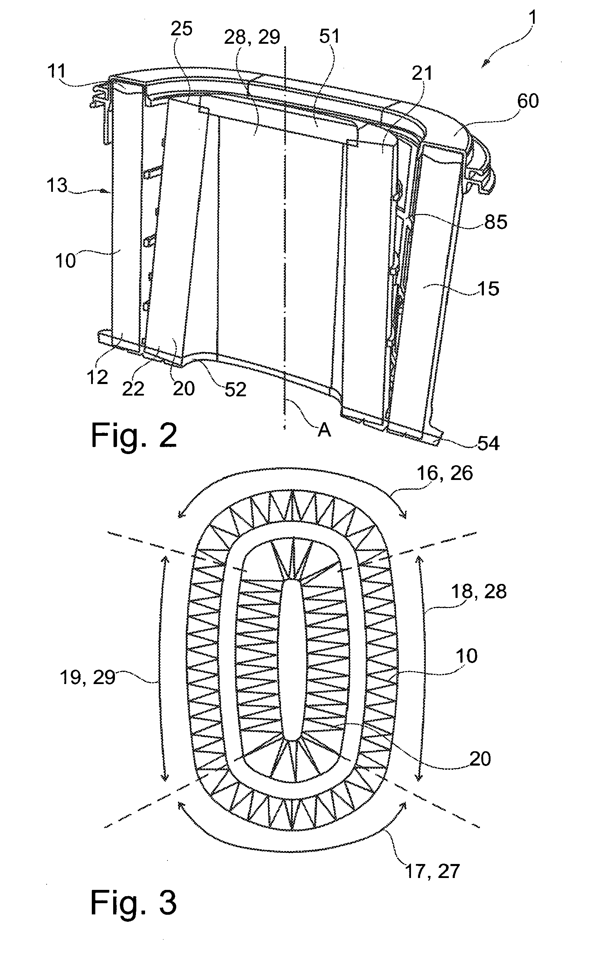

Figur 2 zeigt eine schematische Schnittansicht eines Filterelementes gemäß einer beispielhaften Ausführungsform der Erfindung. Der Schnitt durch das Filterelement ist dabei in einer axialen Ausdehnungsrichtung A ausgeführt, und zwar entlang einer längsten Ausdehnung in einer radialen Ausdehnungsebene. Dabei ist das Filterelement 1 mit einem ersten Faltenbalg 10 sowie einem zweiten Faltenbalg 20 versehen. Der zweite Faltenbalg 20 liegt dabei radial innen zu dem ersten Faltenbalg 10. Der erste Filterbalg 10 weist Filterfalten 15 auf, die eine im Wesentlichen in einer zur axialen Richtung orthogonal verlaufenden Ebene in radialer Ausdehnungsrichtung verlaufende erste Faltentiefe aufweisen. Analog weist der zweite Filterbalg 20 Filterfalten 25 auf, die in einer im Wesentlichen orthogonal zu der axialen Ausdehnungsrichtung verlaufenden Ebene in radialer Ausdehnungsrichtung verlaufen. Dabei sind hier der erste Filterbalg 10 und der zweite Filterbalg 20 in Form eines Sternfilters gefaltet. Der zweite Filterbalg 20 weist im Vergleich zu dem ersten Filterbalg 10 eine höhere Faltungstiefe auf. Auf diese Weise kann die effektive Filterfläche des innen liegenden zweiten Filterbalges 20 erhöht werden. Die nachfolgende Tabelle zeigt eine Auswahl von möglichen Konfigurationen, die eine Erfindungsgemäße Filtervorrichtung aufweisen kann.

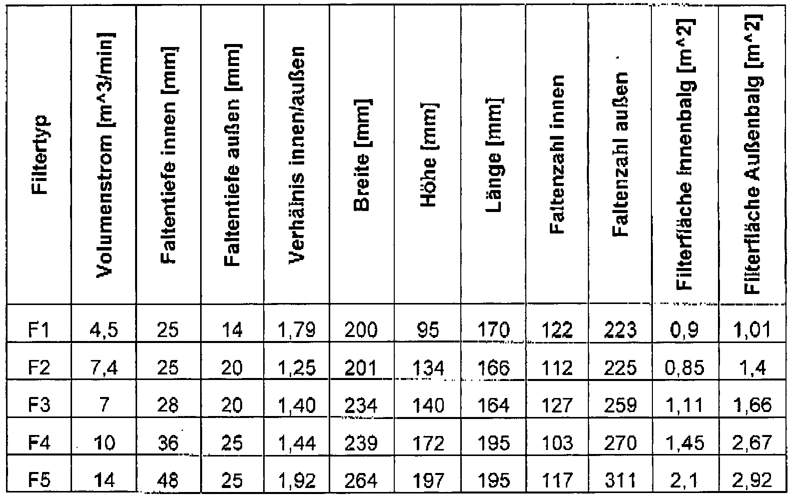

In der hier gezeigten Ausführungsform ist der erste Faltenbalg 10 an einem ersten axialen Ende 11 mit einer formstabilen Abdeckung 60 versehen. Diese formstabile Abdeckung kann sich dabei wie in der Figur 2 gezeigt über die gesamte Faltentiefe des ersten Faltenbalges 10 erstrecken. Jedoch kann sich diese formwahrende Schale auch nur über Teile der ersten Faltentiefe des Faltenbalges 10 erstrecken und die Falten beispielsweise am radial innen liegenden Bereich gegenüber liegend zu den Falten des zweiten Faltenbalges 20 in einer Anströmrichtung unbedeckt lassen. In letzterem Fall erhöht sich die effektive Anströmfläche in einen Kanal, der durch den ersten Faltenbalg 10 und den zweiten Faltenbalg 20 gebildet wird. Die formwahrende Schale 60 kann dabei beispielsweise aus einem verhältnismäßig harten Kunststoff bestehen, ebenso jedoch auch aus einem Metall oder einem anderen formstabilen Material. Die formstabile Schale 60 kann dabei beispielsweise mittels eines Polyurethan(PUR)schaum dichtend eingeklebt werden. Ferner kann an der formwahrenden Schale 60 auch eine Dichtungskonfiguration angeordnet sein, mit der das Filterelement gegenüber einem Luftfiltergehäuse abgedichtet werden kann, so dass eine Rohgasseite und eine Reingasseite des Filterelementes fehfluftdicht voneinander getrennt werden können. Die dabei vorgesehene Dichtungskonfguration kann sowohl eine axial dichtende Dichtung als auch eine radial dichtende Dichtung sein. Die in Figur 2 gezeigte Ausführungsform zeigt hier eine umlaufende Dichtungskerbe, in die eine korrespondierende Dichtungsgeometrie eines Luftfiltergehäuses bzw. eines Luftfiltergehäusedeckels eingreifen kann.

Der erste Filterbalg als auch der zweite Filterbalg können einen gekrümmten ersten Bereich 16, 26 und einen gekrümmten zweiten Bereich 17, 27 sowie jeweils dazwischen liegenden ersten im Wesentlichen geraden Bereich 18, 28 und einen zweiten im Wesentlichen geraden Bereich 19, 29 aufweisen, so wie später mit Bezugnahme auf Figur 3 noch beschrieben wird.

Die im Wesentlichen geraden Bereiche 28, 29 des zweiten Faltenbalges können mit einem Dichtungselement 51 derart miteinander abdichtend verbunden werden, dass eine Reingasseite und eine Rohgasseite fehlluftdicht voneinander getrennt sind. Das Dichtungselement 51 kann sich dabei beispielsweise nur teilweise über die Filterfalten 25 des zweiten Filterbalges erstrecken. Die Falten können dann einseitig verklebt bzw. verschlossen sein, sodass auch bei einer nur teilweisen Überdeckung der Faltentiefe durch das Dichtungselement eine Trennung von Rohgasseite und Reingasseite erreicht wird. Die Verklebung ist dann auf der dem Dichtungselement zugewandten Seite angeordnet. Dies kann pro Filterbalg so ausgeführt werden, dass nur an einer axialen Stirnseite das Zusammenheften der Stirnkanten der Filterfalten erfolgt, wohingegen die Stirnkanten der Filterfalten an der gegenüberliegenden Stirnseite von einem Abdeckelement beispielsweise in Form einer formwahrenden Schale abgedeckt sind. Bezogen auf die beiden Filterbälge wird das Zusammenheften der Stirnkanten der Filterfalten und die Abdeckung wechselseitig durchgeführt, so dass beispielsweise am radial außenliegenden Filterbalg die Stirnkanten verklebt und auf gegenüberliegender axialer Stirnseite von einem Abdeckring abgedeckt sind und am radial innenliegenden Filterbalg die axiale Anströmseite von einer Abdeckscheibe überdeckt ist. Die Stirnkanten auf einer gegenüberliegenden axialen Abströmseite sind können zusammengeheftet bzw. zusammengeklebt sein. Durch das Zusammenheften bzw. Zusammenkleben der Stirnkanten entstehen in Achsrichtung verlaufende Strömungsräume bzw. Kanäle, wobei im Zusammenhang mit den Abdeckelementen sichergestellt ist, dass das herangeführte Fluid die Filterwandung in radiale Richtung durchströmt.

Jedoch ist auch denkbar, dass sich das Dichtungselement 51 über die gesamte Faltentiefe der Filterfalten 25 erstreckt. Dabei wird ein erhöhter Stoßschutz insbesondere für die exponierten Ecken der Filterfalten 25 ermöglicht, jedoch die effektive Anström- bzw. Abströmfläche eines Anström- bzw. Abströmkanals verkleinert, der zwischen dem ersten Filterbalg 10 und dem zweiten Filterbalg 20 gebildet wird.

Darüber hinaus kann ein zweites Dichtungselement 52 vorgesehen sein, das ein zweites axiales Ende 12 des ersten Filterbalges 10 und ein zweites axiales Ende 22 des zweiten Filterbalges 20 dichtend miteinander verbindet, so dass eine Reingasseite und eine Rohgasseite voneinander getrennt werden.

Es sei angemerkt, dass das in Figur 2 gezeigte Filterelement sowohl von dem ersten axialen Ende 11, 21 als auch von dem zweiten axialen Ende 12, 22 her angeströmt werden kann. Die entsprechende Einbaurichtung in einen Luftfilter ergibt sich aus den entsprechenden Anforderungen und äußeren Gegebenheiten.

Der zweite Filterbalg 20 kann gegenüber dem ersten Filterbalg 10 geneigt sein. Dabei kann, wie in Figur 2 gezeigt, der erste Filterbalg 10 im Wesentlichen parallel zu einer axialen Ausdehnungsrichtung A verlaufen, während der zweite Filterbalg 20 gegenüber der axialen Ausdehnungsrichtung A geneigt ist. Aufgrund dieser Neigung kann sich zum Einen durch die Diagonale die effektive Filterfläche des zweiten Filterbalges 20 erhöhen und zum Anderen ein konisch verlaufender Anström- bzw. Abströmkanal bereitgestellt werden, der zwischen dem zweiten Filterbalg 20 gebildet wird, ebenso wie zwischen den inneren Flächen des inneren Filterbalges 20. In einer Ausführungsform ist der radial außenliegende Filterbalg zylinderförmig ausgebildet, wobei dessen Außendurchmesser und dessen Innendurchmesser sich über die axiale Länge nicht ändern. Anstelle dieser zylinderförmigen Ausführung kann in einer alternativen Ausführungsform in Bezug auf die baulichen Erfordernisse des Filtergehäuses 100 auch am Außendurchmesser eine Konizität ausgebildet sein, wodurch sich bei Montage des Filterelementes 1 im Filtergehäuse 100 aufgrund des stetig abnehmenden Außendurchmessers ein zusätzlicher Raum im Inneren des Filtergehäuses bildet, der die Abströmung von gereinigtem Fluid in vorteilhafter Weise beeinflusst, und die Strömungsgeschwindigkeit sowie mit dieser sich einstellende Geräusche minimiert. Der radial innenliegende der Filterbälge 20 kann dabei auch eine Konusform aufweisen, wobei sich der Konus von der Anströmseite zur Abströmseite hin verjüngen kann. Dadurch wird ein Strömungsraum zwischen den Filterbälgen 10, 20 in Form eines Ringkonus erhalten, der sich zur Abströmseite hin verbreitert und in eine Abströmöffnung ausmündet. Dies ist unter strömungstechnischen Gesichtspunkten bezüglich der Ableitung der gereinigten Luft bzw. des gereinigten Fluides von Bedeutung. Über die axiale Länge gesehen besitzt der Strömungsraum somit einen sich ändernden Querschnitt, wobei die Änderungsrate in axiale Richtung im Wesentlichen konstant ist. Grundsätzlich ist aber auch eine über die axiale Länge variierende Änderungsrate möglich. Des Weiteren kann der Strömungsraum auch einen gleichbleibenden Querschnitt aufweisen, was dann der Fall ist, wenn die Innenseite des äußeren Filterbalges und die Auβenseite des inneren Filterbalges konzentrisch zueinander verlaufen, d.h. an diesen keine Konizitäten oder übereinstimmende Neigungen ausgeführt sind. Ist zum Beispiel der außenliegende der beiden Filterbälge mit einem konstanten Innendurchmesser versehen, während an der Außenmantelfläche des radial innenliegenden Filterbalges 20 eine Konizität ausgebildet ist, entsteht ein konisch verlaufender Ringraum. Dieser Ringraum mündet abströmseitig in einer Austrittsöffnung. In diesen Ringraum kann ein Stützgerüst 85 eingelassen werden, welches den Strömungsraum zwischen den Filterbälgen einfasst. Insbesondere bei großen, voluminösen Filtereinrichtungen, deren Filterelemente ein entsprechend höheres Gewicht aufweisen, dient dieses Stützgerät, das beispielsweise als Kunststoffspritzgussteil oder aus Metall gefertigt ist, zur Steigerung der Stabilität. Dieses Stützgerüst 85 kann sowohl in axiale als auch in radiale Richtung verlaufende Rippen aufweisen, über welche insbesondere voluminöser bauende Filterbälge auseinandergehalten werden können, so dass der zwischen diesen ausgebildete konisch verlaufende Strömungsraum hinsichtlich seiner Geometrie ein konstantes Aussehen behält. Das Stützgerüst bietet hier die geforderte mechanische Stabilität durch Abstützung. Das Stützgerüst kann beispielsweise einstückig ausgeführt sein. Sowohl der erste, radial außenliegende Filterbalg 10 als auch der zweite radial innenliegende Filterbalg 20 werden im Wesentlichen in radialer Richtung durchströmt.

Eine derart konische Form kann zum Einen dadurch stabilisiert werden, dass die Neigung und Position des zweiten Filterbalges gegenüber dem ersten Filterbalg durch die dichtenden Elemente 52 bzw. 51 bzw. die formwahrende Schale 60 festgelegt wird. Alternativ oder ergänzend kann die Stabilität auch durch einen Käfig bzw. ein Gerüst 85 erreicht werden, der bzw. das die Formstabilität der beiden Filterbälge zueinander wahrt. Insbesondere während des Fertigungsprozesses des Filterelementes kann bei einem Aufbringen der Dichtungselemente 51 und 52 der formwahrende Halterahmen 85 die Filterbälge derart in Position halten, dass ein problemloses Aufbringen der Dichtungselemente 51 und 52 ermöglicht wird.

Figur 3 zeigt eine Schnittansicht, die orthogonal zu der axialen Ausdehnungsrichtung A verläuft, so wie sie in Figur 2 eingezeichnet ist. In der in Figur 3 gezeigten Schnittansicht weist das Filterelement eine im Wesentlichen ovale Form auf mit gekrümmten und im Wesentlichen geraden Abschnitten. Sowohl der Filterbalg 10 als auch der Filterbalg 20 weisen dabei einen im Wesentlichen ersten gekrümmten Bereich 16, 26 als auch einen zweiten im Wesentlichen gekrümmten Bereich 17, 27 auf, ebenso wie einen ersten im Wesentlichen geraden Bereich 18, 28 als auch einen zweiten im Wesentlichen geraden Bereich 19, 29. Es sei dabei angemerkt, dass der im Wesentlichen gerade Bereich 18, 28, 19, 29 ebenso eine Krümmung aufweisen kann, die jedoch wesentlich geringer ist als die Krümmung der gekrümmten Bereiche 16, 26, 17, 27. Die gekrümmten Bereiche gehen dabei im Wesentlichen knickfrei in die im Wesentlichen geraden Bereiche über, so dass sich eine im Wesentlichen ovale oder auch elliptische Querschnittsform des Filterelementes ergibt. Auf diese Weise kann das Filterelement schmal ausgestaltet werden und eine entsprechende Öffnung in einem Luftfiltergehäuse schmaler ausgestaltet werden als bei einem Filterelement mit einem beispielsweise kreisrunden Querschnitt mit einer vergleichbaren Filterleistung.

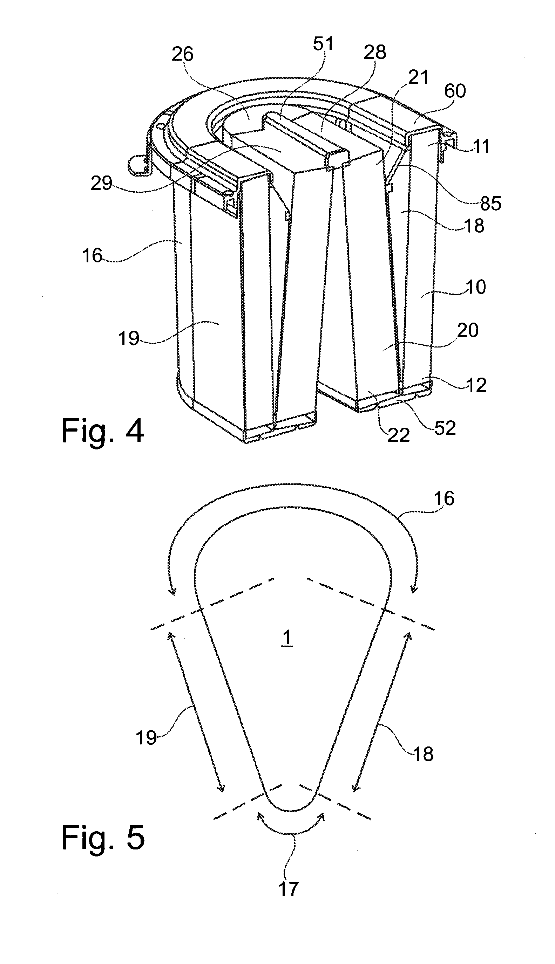

Figur 4 veranschaulicht den strukturellen Aufbau eines Filterelementes gemäß einer beispielhaften Ausführungsform der Erfindung. Dabei weist auch hier der äußere erste Filterbalg 10 einen ersten gekrümmten Abschnitt 16 und einen hier aufgrund des Schnittes nicht dargestellten zweiten gekrümmten Abschnitt 17 auf. Ferner sind die im Wesentlichen geraden Abschnitte 18 und 19 dargestellt, die in der hier gezeigten Ausführungsform ohne Krümmung ausgeführt sind. Analog weist der geneigt ausgeführte zweite innere Faltenbalg ebenfalls einen gekrümmten Bereich 26 sowie einen zweiten hier nicht gezeigten gekrümmten Bereich 27 auf sowie einen ersten im Wesentlichen geraden Bereich 28 und einen zweiten im Wesentlichen geraden Bereich 29. Auch bei dem hier in axiale Richtung geneigt dargestellten zweiten Filterbalg 20 sind die beiden im Wesentlichen geraden Bereiche 28, 29 ohne Krümmung ausgeführt. Die beiden geraden Bereiche 28, 29 des zweiten Filterbalges 20 sind so zueinander positioniert, dass sie über ein Dichtungselement 51 an einem ersten axialen Ende 21 derart gegeneinander abgedichtet werden, dass eine Feingasseite von einer Rohgasseite fehlluftdicht getrennt ist. Ferner ist die formwahrende Schale 60 hier derart ausgestaltet, dass sie sich über die gesamte Faltentiefe des äußeren ersten Faltenbalges 10 erstreckt. Es sei jedoch angemerkt, dass sich das Dichtungselement 51 auch über die gesamte Faltentiefe des zweiten Faltenbalges erstrecken kann, ebenso wie die formwahrende Schale 60 sich nur über einen Teil der Faltentiefe des ersten Faltenbalges 10 erstrecken kann. Am zweiten axialen Ende 12 des ersten Filterbalges 10 sowie am zweiten axialen Ende 22 des zweiten innen liegenden Filterbalges 20 ist in der gezeigten Ausführungsform ein weiteres Dichtungselement 52 vorgesehen, das den Filterbalg 10 gegenüber dem zweiten Filterbalg 20 derart fehlluftdicht abdichtet, dass eine ordnungsgemäße Filterfunktion gewährleistet ist. In der hier in Figur 4 gezeigten Ausführungsform erstreckt sich das abdichtende Element 52 über die gesamte Faltentiefe des äußeren Faltenbalges 10 als auch des inneren Faltenbalges 20. Es sei jedoch verstanden, dass sich das Dichtungselement 51 auch nur teilweise über die Faltentiefe des ersten Faltenbalges 10 bzw. nur teilweise über die Faltentiefe des zweiten Faltenbalges 20 erstrecken kann. Sowohl das Dichtungselement 51 als auch das Dichtungselement 52 können beispielsweise aus einem Polyurethanschaum gefertigt sein, jedoch auch aus irgendeinem anderen für eine Dichtung geeigneten Material. Der Faltenbalg 10 kann gegenüber dem Faltenbalg 20 durch einen Stützkäfig bzw. einen Stützkorb 85 abgestützt sein, so dass der Anström- bzw. Abströmkanal auch bei stärkerer Luftströmung offen gehalten werden kann. Dieser Korb 85 kann beispielsweise an der formwahrenden Schale 60 befestigt sein, so dass sich zusammen mit der formwahrenden Schale ein stützendes Gerüst für die zueinander geneigten Filterbälge 10 und 20 ergibt.

Figur 5 zeigt eine Schnittansicht in einer radialen Ebene eines Filterelementes gemäß einer beispielhaften Ausführungsform der Erfindung. Bei der hier gezeigten Kontur des Filterelementes 1 wird nur Bezug genommen auf die gekrümmten und im Wesentlichen geraden Abschnitte bezüglich des ersten äußeren Faltenbalges 10, wobei sich die Angaben analog für den inneren Faltenbalg 20 ergeben. Figur 5 zeigt eine Ausführungsform, bei der die beiden im Wesentlichen geraden Abschnitte 18, 19 in einer radialen Schnittebene zueinander geneigt sind. Sie verbinden die jeweils gekrümmten Bereiche 16 und 17 derart miteinander, dass sich eine geschlossene Kontur ergibt, die dadurch beispielsweise die Form einer Birne oder eines Tropfens erhalten kann. Durch eine derartige Neigung der im Wesentlichen geraden Bereiche 18, 19 kann beispielsweise eine erleichterte und vereinfachte Einführung in ein Luftfiltergehäuse erreicht werden. Dabei sei verstanden, dass die in Figur 5 gezeigte Neigung bzw. Schrägstellung in der radialen Ebene verhältnismäßig deutlich ausgeprägt ist. Dabei kann diese Neigung bzw. Schrägstellung in einer tatsächlichen Ausführungsform auch wesentlich geringer ausfallen, insbesondere wenn es um eine optimierte Ausgestaltung eines Filterelementes geht, bei der die Neigung gegenüber den verbleibenden Filterparametern optimiert ausgelegt wird. Auch hier können die gekrümmten Bereiche im Wesentlichen knickfrei in die geraden Bereiche 18, 19 übergehen. Eine derartige Anordnung zueinander geneigter im Wesentlichen gerader Abschnitte ist insbesondere bei einer radialen Kraftbeaufschlagung von Relevanz. Durch eine derart geneigte Anordnung kann erreicht werden, dass eine ebenfalls geneigte Anordnung einer Gegendichtfläche erst kurz vor der Endposition in Kontakt bzw. in eine Kraftbeaufschlagung gerät, so dass über weite Bereiche eine im Wesentlichen quer verlaufende Schleifbewegung der beiden Dichtflächen übereinander vermieden werden kann. Auf diese Weise kann die Lebensdauer der Dichtflächen erhöht werden, insbesondere bei einem Luftfiltergehäuse, das im Regelfall eine wesentlich längere Lebensdauer aufweist als das Filterelement 1, das in regelmäßigen Abständen ausgetauscht wird.

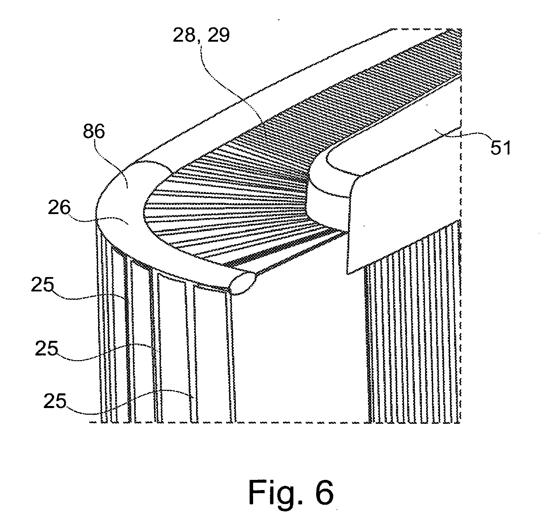

Figur 6 stellt eine beispielhafte Ausführungsform eines zweiten inneren Faltenbalges dar. Dabei ist neben dem Dichtungselement 51, das die im Wesentlichen geraden Abschnitte 28,29 miteinander dichtend verbindet, ferner ein Abstandshalter bzw. Kantenschutz 86 vorgesehen, der insbesondere in dem gekrümmten Bereich 26 des zweiten Faltenbalges 20 die in diesem Bereich angeordneten Filterfalten 25 in einem gewissen Abstand hält, so dass diese bei einer verstärkten Luftanströmung nicht gegeneinander gepresst werden und kollabieren. Dieses Kantenschutz- bzw. Abstandselement 86 kann dabei aus dem gleichen Material wie das Dichtungselement 51 gefertigt sein und im gleichen Fertigungsschritt aufgebracht werden. Jedoch sei verstanden, dass das Element 86 auch aus einem anderen Material bestehen kann, insbesondere wenn das Abstands- und Kantenschutzelement 86 ferner die Funktion eines Stoß- bzw. Verformungsschutzes übernehmen soll, jedoch nicht die räumliche Ausdehnung erhalten soll wie das Dichtungselement 51. Insbesondere kann hier ein harter Klebstoff in Form einer Leimraupe aufgebracht werden, die in diesem Fall beispielsweise eine höhere Härte aufweist als das Material des Dichtungselementes 51.

## Patentansprüche

1. Luftfilterelement für einen Luftfilter einer Brennkraftmaschine, wobei das Filterelement (1) aufweist:
einen ersten Filterbalg (10) mit im Wesentlichen in einer axialen Ausdehnungsrichtung (A) des Filterelementes verlaufenden Filterfalten (15) und einer im Wesentlichen in einer dazu orthogonal verlaufenden Ebene in radialer Ausdehnungsrichtung verlaufenden ersten Faltentiefe;
einen zweiten Filterbalg (20) mit im Wesentlichen in einer axialen Ausdehnungsrichtung (A) des Filterelementes verlaufenden Filterfalten (25) und einer im Wesentlichen in einer dazu orthogonal verlaufenden Ebene in radialer Ausdehnungsrichtung verlaufenden zweiten Faltentiefe, wobei der erste und der zweite Filterbalg (10, 20) jeweils einen ersten gebogenen Abschnitt (26) und einen zweiten gebogenen Abschnitt in einer Ebene der radialen Ausdehungsrichtung aufweisen mit einem jeweils dazwischen liegenden ersten im Wesentlichen geraden Abschnitt und einem zweiten im Wesentlichen geraden Abschnitt derart, dass der erste und der zweite gebogene Abschnitt sowie der erste und der zweite im Wesentlichen gerade Abschnitt eine geschlossene ovale Umfangskontur darstellen;
wobei der zweite Filterbalg (20) radial innen zu dem ersten Filterbalg (10) angeordnet ist und an einem ersten axialen Ende des zweiten Filterbalges der erste gerade Abschnitt mit dem zweiten geraden Abschnitt derart mit einem ersten Dichtungselement miteinander verbunden sind, dass eine Reingasseite und eine Rohgasseite des zweiten Filterbalges fehlluftdicht voneinander getrennt sind;
wobei eine Tiefe der zweiten Filterfalten (25) tiefer ist als eine Tiefe der korrespondierenden ersten Filterfalten (15), wobei der erste Filterbalg und der zweite Filterbalg jeweils an einem zweiten axialen Ende derart mit einem zweiten Dichtungselement miteinander verbunden sind, dass jeweils die Reingasseiten und die Rohgasseiten des ersten Filterbalges bzw. des zweiten Filterbalges fehlluftdicht voneinander getrennt sind.

2. Luftfilterelement nach Anspruch 1, wobei die Tiefe der zweiten Filterfalten (25) um den Faktor 1,1 bis 2,5, insbesondere um den Faktor von 1,2 bis 1,9 tiefer ist als die Tiefe der korrespondierenden ersten Filterfalten (15).

3. Luftfilterelement nach einem der Ansprüche 1 und 2, wobei die Filterfalten (25) des zweiten Filterbalgs (20) gegenüber den Filterfalten (15) des ersten Filterbalgs(10) einer axialen Ausdehnungsrichtung (A) wenigstens abschnittsweise geneigt sind.

4. Luftfilterelement nach einem der Ansprüche 1 bis 3, wobei eine Neigung der Filterfalten (25) des zweiten Filterbalgs (20) zu der axialen Ausdehnungsrichtung (A) größer ist als eine Neigung der Filterfalten (15) des ersten Filterbalgs (10) zu der axialen Ausdehnungsrichtung (A).

5. Luftfilterelement nach einem der Ansprüche 1 bis 4, wobei der erste Filterbalg (10) an einem ersten axialen Ende (11) mit einer bezüglich einer Außenkante (13) des ersten Filterbalges (10) formwahrenden Schale (60) versehen ist.

6. Luftfilterelement nach einem der Ansprüche 1 bis 5, wobei der im Wesentlichen erste gerade Abschnitt (18) und der im Wesentlichen zweite gerade Abschnitt (19) in der Ebene der radialen Ausdehnungsrichtung aufeinander zulaufen.

7. Luftfilterelement nach einem der Ansprüche 1 bis 6, wobei sich das erste Dichtungselement (51) in einer Ebene der radialen Ausdehnungsrichtung nur teilweise über die Tiefe der zweiten Filterfalten (25) des zweiten Filterbalges (20) erstreckt.

8. Luftfilterelement nach einem der Ansprüche 1 bis 7, wobei sich das zweite Dichtungselement (52) in einer Ebene der radialen Ausdehnungsrichtung nur teilweise über die Tiefe der ersten Filterfalten (15) und der zweiten Filterfalten (25) erstreckt.

9. Luftfilterelement nach einem der Ansprüche 1 bis 8, wobei das Dichtungselement (51, 52, 53) einem PUR-Schaum aufweist.

10. Luftfilterelement nach einem der Ansprüche 1 bis 9, wobei eine Reingasseite des ersten Faltenbalges (10) einer Reingasseite des zweiten Faltenbalges (20) zugewandt ist.

11. Luftfilterelement nach einem der Ansprüche 1 bis 10, wobei der erste Filterbalg (10) eine erste Rohgasseite und eine erste Reingasseite aufweist und der zweite Filterbalg (20) eine zweite Rohgasseite und eine zweite Reingasseite aufweist, wobei der erste Filterbalg (10) und der zweite Filterbalg (20) derart an einer Stirnseite des ersten Filterbalges und einer Stirnseite des zweiten Filterbalges fehlluftundurchlässig miteinander derart verbunden sind, dass entweder ein erster rohgasseitiger Raum einem zweiten rohgasseitigen Raum oder ein erster reingasseitiger Raum einem zweiten reingasseitigem Raum entspricht.

## Claims

1. Air filter element for an air filter of an internal combustion engine, the filter element (1) featuring:
a first filter bellows (10) with filter folds (15) extending substantially in an axial extension direction (A) of the filter element and a first fold depth extending in a radial extension direction in a plane extending substantially orthogonally thereto;
a second filter bellows (20) with filter folds (25) extending substantially in an axial extension direction (A) of the filter element and a second fold depth extending in a radial extension direction in a plane extending substantially orthogonally thereto, wherein the first and the second filter bellows (10, 20) each feature a first bent section (26) and a second bent section in a plane of the radial extension direction with a first substantially straight section and a second substantially straight section disposed each therebetween in such a way that the first and the second bent section as well as the first and the second substantially straight section represent a closed oval perimeter;
wherein the second filter bellows (20) is disposed radially inside relative to the first filter bellows (10) and at a first axial end of the second filter bellows the first straight section is connected with the second straight section by means of a first sealing element in such a way that a clean gas side and a raw gas side of the second filter bellows are separated from each other in an infiltrated-air-tight manner;
wherein a depth of the second filter folds (25) is deeper than a depth of the corresponding first filter folds (15), wherein the first filter bellows and the second filter bellows are connected each with a second axial end by means of a second sealing element in such a way that the clean gas sides and the raw gas sides each of the first filter bellows and the second filter bellows, respectively, are separated from each other in an infiltrated-air-tight manner.

2. Air filter element according to claim 1, wherein the depth of the second filter folds (25) is about the factor 1.1 to 2.5, in particular about the factor 1.2 to 1.9, deeper than the depth of the corresponding first filter folds (15).

3. Air filter element according to one of the claims 1 and 2, wherein the filter folds (25) of the second filter bellows (20) are inclined at least sectionwise in relation to the filter folds (15) of the first filter bellows (10) in an axial extension direction (A).

4. Air filter element according to one of the claims 1 to 3, wherein an inclination of the filter folds (25) of the second filter bellows (20) is greater in relation to the axial extension direction (A) than an inclination of the filter folds (15) of the first filter bellows (10) in relation to the axial extension direction (A).

5. Air filter element according to one of the claims 1 to 4, wherein the first filter bellows (10) is provided at a first axial end (11) with a shape-retaining shell (60) with respect to an outer edge (13) of the first filter bellows (10).

6. Air filter element according to one of the claims 1 to 5, wherein the first substantially straight section (18) and the second substantially straight section (19) run towards each other in the plane of the radial extension direction.

7. Air filter element according to one of the claims 1 to 6, wherein the first sealing element (51) extends in a plane of the radial extension direction only partially over the depth of the second filter folds (25) of the second filter bellows (20).

8. Air filter element according to one of the claims 1 to 7, wherein the second sealing element (52) extends in a plane of the radial extension direction only partially over the depth of the first filter folds (15) and the second filter folds (25).

9. Air filter element according to one of the claims 1 to 8, wherein the sealing element (51, 52, 53) features a PUR foam.

10. Air filter element according to one of the claims 1 to 9, wherein a clean gas side of the first bellows (10) faces a clean gas side of the second bellows (20).

11. Air filter element according to one of the claims 1 to 10, wherein the first filter bellows (10) features a first raw gas side and a first clean gas side and the second filter bellows (20) features a second raw gas side and a second clean gas side, wherein the first filter bellows (10) and the second filter bellows (20) are connected with each other at a front face of the first filter bellows and at a front face of the second filter bellows in a infiltrated-air-tight manner in such a way that either a first raw gas side chamber corresponds to a second raw gas side chamber or a first clean gas side chamber corresponds to a second clean gas side chamber.

## Revendications

1. Élément de filtre à air pour un filtre à air d'un moteur à combustion interne, l'élément filtrant (1) présentant :
un premier soufflet de filtre (10) avec des plis de filtre (15) évoluant essentiellement dans une direction d'extension axiale (A) de l'élément filtrant et avec un premier creux de plis évoluant essentiellement dans un plan orthogonal par rapport aux plis de filtre dans une direction d'extension radiale ;
un deuxième soufflet de filtre (20) avec des plis de filtre (25) évoluant essentiellement dans une direction d'extension axiale (A) de l'élément filtrant et avec un deuxième creux de plis évoluant essentiellement dans un plan orthogonal par rapport aux plis de filtre dans une direction d'extension radiale, le premier et le deuxième soufflets de filtre (10, 20) présentant chacun une première section courbe (26) et une deuxième section courbe dans un plan de la direction d'extension radiale, avec, entre elles, une première section essentiellement droite et une deuxième section essentiellement droite, de sorte que la première et la deuxième sections courbes ainsi que la première et la deuxième sections essentiellement droites forment un contour circonférentiel ovale fermé ;
le deuxième soufflet de filtre (20) étant disposé de manière radiale, à l'intérieur, par rapport au premier soufflet de filtre (10) et, à une première extrémité axiale du deuxième soufflet de filtre, la première section droite étant reliée à la deuxième section droite au moyen d'un premier élément d'étanchéité de sorte qu'un côté de gaz pur et un côté de gaz brut du deuxième soufflet de filtre soient séparés l'un de l'autre de manière étanche aux fuites d'air ;
un creux des deuxièmes plis de filtre (25) étant plus profond qu'un creux des premiers plis de filtre correspondants (15), le premier soufflet de filtre et le deuxième soufflet de filtre étant reliés à une deuxième extrémité axiale au moyen d'un deuxième élément d'étanchéité de sorte que les côtés de gaz pur et les côtés de gaz brut du premier soufflet de filtre et/ou du deuxième soufflet de filtre soient séparés l'un de l'autre de manière étanche aux fuites d'air.

2. Élément de filtre à air selon la revendication 1, le creux des deuxièmes plis de filtre (25) étant plus profond du facteur 1,1 à 2,5, notamment du facteur 1,2 à 1,9, que le creux des premiers plis de filtre correspondants (15).

3. Élément de filtre à air selon l'une des revendications 1 et 2, les plis de filtre (25) du deuxième soufflet de filtre (20) étant inclinés, au moins sur certaines sections, par rapport aux plis de filtre (15) du premier soufflet de filtre (10) dans une direction d'extension axiale (A).

4. Élément de filtre à air selon l'une des revendications 1 à 3, une inclinaison des plis de filtre (25) du deuxième soufflet de filtre (20) par rapport à la direction d'extension axiale (A) étant supérieure à une inclinaison des plis de filtre (15) du premier soufflet de filtre (10) par rapport à la direction d'extension axiale (A).

5. Élément de filtre à air selon l'une des revendications 1 à 4, le premier soufflet de filtre (10) étant pourvu, au niveau d'une première extrémité axiale (11), d'une coque (60) à la forme stable par rapport à un bord extérieur (13) du premier soufflet de filtre (10).

6. Élément de filtre à air selon l'une des revendications 1 à 5, la première section essentiellement droite (18) et la deuxième section essentiellement droite (19) convergeant l'une vers l'autre dans le plan de la direction d'extension radiale.

7. Élément de filtre à air selon l'une des revendications 1 à 6, le premier élément d'étanchéité (51) ne s'étendant dans un plan de la direction d'extension radiale que partiellement au-dessus du creux des deuxièmes plis de filtre (25) du deuxième soufflet de filtre (20).

8. Élément de filtre à air selon l'une des revendications 1 à 7, le deuxième élément d'étanchéité (52) ne s'étendant dans un plan de la direction d'extension radiale que partiellement au-dessus du creux des premiers plis de filtre (15) et des deuxièmes plis de filtre (25).

9. Élément de filtre à air selon l'une des revendications 1 à 8, l'élément d'étanchéité (51, 52, 53) étant constitué de mousse PUR.

10. Élément de filtre à air selon l'une des revendications 1 à 9, un côté de gaz pur du premier soufflet de filtre (10) étant orienté vers un côté de gaz pur du deuxième soufflet de filtre (20).

11. Élément de filtre à air selon l'une des revendications 1 à 10, le premier soufflet de filtre (10) présentant un premier côté de gaz brut et un premier côté de gaz pur et le deuxième soufflet de filtre (20) présentant un deuxième côté de gaz brut et un deuxième côté de gaz pur, le premier soufflet de filtre (10) et le deuxième soufflet de filtre (20) étant reliés l'un à l'autre de manière étanche aux fuites d'air sur une face frontale du premier soufflet de filtre et sur une face frontale du deuxième soufflet de filtre de sorte que soit un premier espace du côté de gaz brut corresponde à un deuxième espace du côté de gaz brut ou un premier espace du côté de gaz pur corresponde à un deuxième espace du côté de gaz pur.
